# EUROPEAN PATENT SPECIFICATION

(11) **EP 2 659 065 B1**
(45) Date of publication and mention of the grant of the patent: **12.10.2016**
(21) Application number: 11805842.9
(22) Date of filing: 22.12.2011
(51) Int. Cl.: D21H 25/04, B29C 59/08, F23N 5/00

(54) **FLAME TREATMENT OF A SUBSTRATE**
FLAMMBEHANDLUNG VON SUBSTRATEN
TRAITEMENT À LA FLAMME D'UN SUBSTRAT

(30) Priority: 29.12.2010 SE 1001236
(43) Date of publication of application: 06.11.2013
(73) Proprietor: Tetra Laval Holdings & Finance SA, 1009 Pully (CH)
(72) Inventor: SANDSTRÖM, Anders, S-235 93 Vellinge (SE)
(74) Representative: Tetra Pak - Patent Attorneys SE
(86) International application number: PCT/EP2011/073761
(87) International publication number: WO 2012/089611

(56) References cited:
- WO-A1-01/57438
- WO-A2-2009/094791
- DE-B- 1 054 038
- US-A- 3 640 788

## Description

### Technical Field

The invention generally relates to the field of treatment of a substrate such as a paper, paperboard or carton with a flame.

### Background of the invention

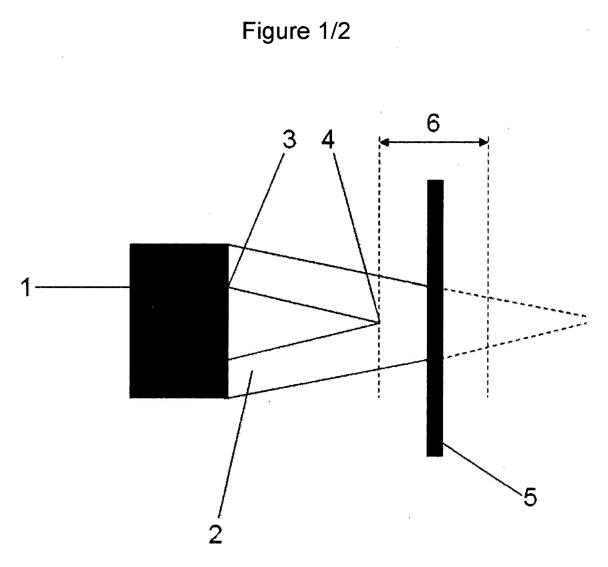

The present invention relates to flame treatment of a substrate, such as a paper, paperboard or carton. The substrate is flame treated in order to oxidize its surface to make it more polar. Combustion chemistry involves mixing a fuel and oxygen, for example propane and air and provide ignition. The combustion reaction is in fact not only one reaction but many reactions. The flame contains many reactive species, such as hydroxyl radicals, carbonyl radicals, carboxyl radicals, oxygen atoms and ions etc. The reactive species are used to increase the surface energy of the substrate and improve adhesion. The flame also heats and dries the substrate, which also can improve adhesion to a plastic material. There are many factors affecting the result, for example the mixture of the fuel and air (oxygen). Conventionally the flame treatment device contains an analyzer controlling the mixture of air and fuel. The mixture of air and fuel is important to obtain a flame having repeatable characteristics which is desired in order to obtain a uniform treatment of the substrate. The substrate should be located on a suitable distance from the flame in order to obtain the desired treatment. Fig 1 is a schematic view of a flame (2) emanating from a burner (1). Generally, in a simplified approach, the flame may be defined as comprising two parts, an outer part (2) and an inner part (3). The temperature of the flame is not consistent throughout the flame and normally the edge of the inner part (3) is considered having the highest temperature. In conventional flame treatment the substrate (5) should be arranged to obtain sufficient treatment, where sufficient is when positional relationship between the flame and the substrate remains within pre-determined limits (6). In order to obtain this positional relationship an operator visually observes the flame and arranges the burner in order to obtain the desired distance between the edge of the inner part (3) and the substrate. The adjustment is thus operator dependent and it is not normally easy to visually determine what part of the flame is suitable for placing the substrate. By visual adjustment repeatability is a problem. Additionally there are safety aspects concerning visual inspection of a flame. There are drawbacks when arranging the substrate too close to the edge of the inner part (3). There are also drawbacks in arranging the substrate to far from the part of the flame having the highest temperature. In either case it is likely that sufficient treatment is not obtained.

US 3 640 788 discloses a method of priming paper web for its firm and even bond with subsequently applied molten polyolefin as a coating. The method provides for continuously feeding a paper web at relatively high speed to and past a station at which there is directed against the face to-be-coated of the passing web stiff flame which is fed by a combustible mixture of gas and air at a ratio to obtain substantially complete combustion of the mixture at the flame tip, thereby to cause a decrease in the polarity of the cellulose structure of the web face for enhanced adhesion of the subsequently applied molten polyolefin to this web face.

DE 10 54 038 B discloses an oil burner with a pre-mix flammable gas with combustion air, wherein the burner head comprises at least two parallel and spaced rows with a small spacing of gas-air mixture outlet channels. WO 01/57438 discloses a burner comprising a burner body wherein a mixture of fuel and air can be introduced, and a burner head wherein a plurality of openings is provided, through which said mixture can flow. The burner head is associated with shield means shielding said burner head and suitable for limiting the maximum temperature that said burner head can reach during working of the burner.

WO 2009/094791 discloses a gas burner, which is suited particularly for the flame treatment of large substrate surfaces, for example for coating such surfaces in a combustion chemical vapor deposition (CCVD) process. The gas burner comprises a burner body having a gas feed connection and a nozzle plate, wherein the burner body and the nozzle plate together form a gas plenum, and the nozzle plate forms a perforated wall region of the gas plenum. The nozzle plate has a large number of nozzles which extend from a plenum side to a flame side of the nozzle plate and is made of a plurality of metal sheets which are arranged in a stack and run substantially perpendicular or substantially parallel to the nozzle direction. The metal sheets have continuous openings, wherein at least some of the continuous openings of all metal sheets are oriented relative to each other, or they have a comb-like shape.

In "Spectroscopic Imaging System for Flame Radical Profiling" published 2010 in IEEE a system and method are disclosed for visualizing and characterizing free radicals in combustion flames. The system combines optical splitting and filtering, intensified imaging and image processing techniques, providing a solution for the monitoring of flame radicals (OH*, CN*, CH*, and C2*) simultaneously and continuously.

In "Flame surface treating-new perspectives" published 1987 in TAPI a system and method are disclosed comprising a high-volume, low-pressure centrifugal air blower moves a column of air through n venturi mixer. The venturi section is adapted with a needle valve to pull gas according to demand from a pressure-regulated gas line. The resulting mixture, which is as lean as it can be for continuous combustion is conveyed to the burner face and ignited. The flame front in the oxidizing zone impacts on the plastic coating and the excess oxygen activated by the high temperatures combines with carbon molecules forming the polar groupings generally associated with an oxidized surface film. The treated surface is approximately a molecular layer thick. The treatment flame is then bounced off the sheet and swept up into the exhaust ducts by an appropriate blower.

Thus there is a need for methods and/or systems controlling the flame to obtain sufficient treatment of the substrate.

### Summary of the invention

One object of the present invention to control the flame treatment of a substrate. One object is to arrange a substrate suitable for flame treatment in in order to obtainsufficient treatment of the substrate. One object is to provide sufficient treatment in a continuos process, i.e. where the substrate is a continuosly moving web-shaped material, such as a paper web, carton web or a paperboard web.

Objects of the present invention are achieved by a method for optimizing adhesion by controlling flame treatment of a substrate, in which treatment a flame emanating from a burner is applied to a substrate, said method comprising controlling the mass flow of fuel and air fed to the burner, acquiring radical emission data by monitoring radical emission emanating from the flame using a flame analyzer, processing the radical emission data, comparing the thus acquired radical emission data with radical emission data from a database, and outputting the result of the comparison.

One object is achieved by the above mentioned method and wherein an error signal is generate when the acquired radical emission data deviate from the radical emission data in the database.

One object is achieved by further comprising adjusting at least one of the mass flow of fuel and/or air fed to the burner, a relative angle between the burner and the substrate, and the distance between the burner and the substrate when the acquired radical emission data deviate from the radical emission data in the database.

One object of the present invention is achieved by a system for controlling flame treatment of a substrate, said system comprising a burner, a flame analyzer comprising a camera and a filter, wherein the flame analyzer is arranged to monitor radical emission emanating from the flame.

### Brief description of the drawings

The above, as well as additional objects, features and advantages of the present invention, will be better understood through the following illustrative and non-limiting detailed description of preferred embodiments of the present invention, with reference to the appended drawings, wherein:
Figure 1 is a schematic illustration of a flame.
Figure 2 is a schematic illustration of the system of the invention.

### Detailed description of preferred embodiments

There are many factors affecting the flame treatment of a substrate. Some important parameters are gas flow, gas type, fuel mixture (mixture of fuel and oxygen, such as air), the distance between the burner and the substrate, the angle between the burner and the substrate, and the speed of the web substrate. Naturally it is preferred if many of the parameters are kept constant but normally this is not possible due to factors such as clogging of part of the burner nozzle, affecting the gas flow; variations in the fuel mixture; and variation of the line speed (the line transporting the substrate). According to the present invention any fuel and mixture of different compatible fuels may be used, non-limiting examples thereof are natural gas, liquid pertroleum gas (LPG) and methane. The fuel mixture is normally a mixture between one or more fuel(s) and oxygen. Air is often used as the oxygen source and the air-fuel ratio is often expressed as percent excess combustion air. As an example, excess combustion air of 15 percent means that 15 percent more than the required stoichiometric air is being used. According to the present disclosure the excess oxygen is normally within about -5% to about +5%. The gas flow is generally within 5-50 m³. Other parameters affecting the treatment of the substrate are the distance between the burner and the substrate; as well as the angle between the burner and the substrate. According to the present disclosure the angle between the burner and the substrate is normally about 90°. The angle may however be anywhere within the interval 60-120°. As described above and in the accompanying claims the invention relates to a method for controlling flame treatment of a substrate, in which treatment a flame emanating from a burner is applied to a substrate, said method comprising controlling the mass flow of fuel and air fed to the burner, monitoring radical emission from the flame using a flame analyzer, wherein the positional relationship between a portion of the flame and the substrate may be deduced.

Additionally the invention relates to a system for controlling flame treatment of a substrate, said system comprising a burner, a flame analyzer comprising a camera and a filter, wherein the flame analyzer is arranged to monitor radical emission emanated by the flame.

According to the invention limits for the radical emission data is determined by measuring the radical emission from the flame (i.e. intensity) and comparing the emission with the treatment obtained, i.e if acceptable adhesion and/or surface tension is obtain. It is thus possible to determine the lower and upper limit of the radical emission where an acceptable substrate treatment is obtained. One way of determining the radical emission limits is by a design of experiment (DoE) approach having surface tension and adhesion as substrate response. The experiment includes varying the gas flow, air/gas mixture and the distance between the burner and the substrate. The experiment results in determining upper and lower limits where acceptable treatment of the substrate is obtain. The obtained limits are used to create a database which is used to compare the acquired radical emission data with radical emission data from a database, and by measuring the radical emission and comparing with the database acceptable substrate treatment can be obtained.

As described above the acquired radical emission data which for example relates to the intensity of the radicals at a position of the flame is compared to values in a database and when an unacceptable deviation is obtained this is outputted in order for an operator to take action. Optionally an additional step adjusting at least one of the following: the mass flow of fuel and/or air fed to the burner, a relative angle between the burner and the substrate, and the distance between the burner and the substrate is per performed. Generally an unacceptable deviation is a deviation of about more than 20% such as more than 10%, such as more than 5% such as more than 1%.

The radical emission is a measurement of the concentration of the radicals in the flame and the limits thus relates to concentrations of radicals where acceptable treatment of the substrate is obtained. When the radical is selected from hydroxyl radical the maximum hydroxyl radical intensity occurs near the location of maximum flame temperature. Hydroxyl radicals are thus suitably used within the present disclosure and as discussed below the concentration of hydroxyl radicals (OH radicals) are suitably measured at about 310 nm, where interference of other radicals are within acceptable level. It is also possible to obtain an acceptance equation defining the shape and profile of the radical emission emanating from the flame. It has thus been discovered that the hydroxyl radical have an impact on the level of surface oxidation of the treated substrate. The radical emission may be monitored over the whole flame or over selected portions of the flame. One example is to measure the radical emission intensity close to the substrate or even including the part where the flame hits the substrate. Monitoring also the part where the flame hits the substrate could be beneficial as it will allow improved monitoring of the edges of the substrate. The flame analyzer may analyze only part of the obtained information.

Additionally it is preferable but not a requirement of the present disclosure to avoid interfering light when monitoring the radical emission. For this reason it may be beneficial to monitor radicals emanating in the UV region (λ = 10-400 nm) as conventionally there are no UV emission sources in the surface treatment device. One example of the present disclosure relates to monitoring one or more, such as two, three or four radical emissions. For example the emission of hydroxyl radicals could be combined with monitoring CN radical emission and/or CH radical emission. The system of the disclosure was used to imaging flame characteristics during testing of different settings of the flame treatment parameters. From these measurements, flame characteristics resulting in surface tension and/or adhesion between the substrate and a plastic film or material extruded to the substrate was correlated to be within the specification set for surface tension or adhesion. Measuring the emission of radicals made it possible to correlate what level of radical emission that would lead to acceptable adhesion or surface tesion between the substrate and the film or material extruded on the substrate. Based on the determination it was possible to set the limits for the radical emission. Adhesion between the substrate and the film or material extruded on the substrate is normally determind by the tape test or by using test equipment such a those marketed by Instron ®. The adhesion tests are those conventionally used and sufficient adhesion is within the capability of the skilled person to determine for example by using the tape test. The measurement using the Instron ® equipment is performed according to ISO8510-2 using 180°, speed 50mm/min and sample width of 15 mm. Sufficient treatment is considered to be above 10 N/m, such as above 30N/m.

The above mentioned radical emission is made by a flame analyzer, which in one example at least comprises a camera, for example a camera having at least one image sensor that detects light in the ultraviolet (UV) range, such as a charge coupled device (CCD) camera.

Suitable cameras are marketed as Princeton Instruments I-Max camera, SVS-Vistek camera, AVT- Stingray camera and AVT- Prosilca camera, equiped with a CCD UV-sensor. The camera may if necessary also be equiped with one or more filter(s) allowing only light of certain wavelengths to pass.

Emission from radicals typically resides in narrow wavelength regions, and thus it may be possible to select a specific radical by use of a suitable filter in front of the detector. Suitable filters for this purpose are bandpass filters, transmitting emission in a narrow wavelength region. Bandpass filters are defined by their "central wavelength", corresponding to the centre of the transmission interval or the wavelength of the maximum transmittance, and by their "bandpass region" corresponding to the width of the transmission interval. The property "Full Width at Half Maximum" (FWHM) is well established and may also be used for quantification of the bandpass region.

It is possible to measure the radical emission from many radicals but some suitable examples are NH, OH, CN, C2 and CH radicals. The radicals emit light at different wavelengths and if the emission from more than one radicals are measured complementary information may be obtained. NH radicals emit in the range 330-340 nm and a suitable filter is Asahi XBPA340, having a maxiumum transmittance at about 340 nm and the full FWHM is 10 nm; OH radicals emit in the range 281-343 nm and a suitable filter is Asahi XBPA310, having a maxiumum transmittance at about 310 nm and the FWHM is 10 nm; CN radicals emit in the range 380-390 nm and a suitable filter is Asahi XBPA390, having a maxiumum transmittance at about 390 nm and the FWHM is 10 nm; C2 radicals emit in the range 470-564 nm and a suitable filter is Asahi XBPA520, having a maxiumum transmittance at about 520 nm and the FWHM is 10 nm; CH radicals emit in the range 390-440 nm and a suitable filter is Asahi XBPA430, having a maxiumum transmittance at about 430 nm and the FWHM is 10 nm. Other suitable filters are marketed by Princeton Instruments.

In one example it is the OH radicals that are controlled in the method and system of the disclosure and thus the filter preferably has λₘₐₓ at 310 ± 5 nm, for example the Asahi XBPA310, having a maxiumum transmittance at about 310 nm and the FWHM is 10 nm being suitably used.

The flame analyzer comprises the above mention camera and a filter and a processing unit. The processing unit analyzes the images obtained by the camera and generates alarm and/or control signals. The camera may either take an image over the whole flame treatment area or the camera makes an image over one part of the flame treatment area followed by an image of a subsequent part of the flame treatment area until images over the complete area are obtained. It is also possible to have the camera focusing on one area of the flame treatment area (i.e. a specific portion of the flame) only but in certain aspects it is preferred to use the complete flame treatment area (i.e. assemble the individual images take to get an image of the whole flame). The camera is preferably taking many images per time unit, such as between 2-200 images during the period of 1-10 s.

The burner from where a flame emanates may be any suitable burner but it is preferred that the burner is of a dimension correlated to the substrate it is to treat, i.e. the width of the web substrate corresponds to the width of the flame. It is also possible according to the present disclosure to use a burner emanating one or more flame(s). The flame may be of any type but typically flames considered as a longer type are used. It is however also possible to use flames of a shorter type, such as up to about 10 mm. It is also possible to use one or more flames, originating from one or more burner(s), i.e. stacked flames. In certain aspects stacked flames are beneficial as the treatment is performed over a bigger area at the same time and using stacked flames may improve the treatment. In one example the width of the flame is about the same as the width of the web-shaped substrate that is being treated.

The processing unit may be used to evaluate many effects of the radical emission; some examples are fluctuation of flame, i.e. pulsing over time, evenness of flame, i.e. the flame consistency over the flame treatment area, flame shape and burner position. The processing unit is thus using image analysis to determine if the radical emission is within the limits. In one example of the disclosure the intensity distribution of one or more image(s) in the flame direction (from burner to substrate) is compared to a predefined curve. Thus enabling the possibility to determine if the burner position in relation to the substrate is acceptable considering the current production settings of critical process parameters.

The flame analyzer may generate an alarm when one or more of the pre-determined criterias are outside the limits. The alarm may be an absolute or relative alarm. An absolute alarm is when one or more of the pre-determined criterias are not fulfilled. A relative alarm is for example when the intensity of the radical emission is reduced over time and an alarm generated. Alternatively a relative alarm may be generated when there are unacceptable differences over the treatment area. The alarm may be generates as any suitable type of alarm.

In one example the flame analyzer generates a signal instead of or complementary to the alarm. The signal is send to an appropriate device that is used to alter the criterias of the radical emission. Examples of such devices are devices adjusting the fuel mixture and/or the rate of gas flow rate. Other examples are devices adjusting the angle between the burner and the substrate, preferably by tilting the burner; and devices adjusting the distance between the burner and the substrate, preferably by adjusting the burner.

In one example of the disclosure the flame analyzer generates a signal and optionally an alarm to a device adjusting the distance between the burner and the substrate. In one example the flame analyzer generates an alarm only and the distance between the burner and the substrate is adjusted manually. The adjustment, manual or automatic, should be such that an acceptable radical emission, determined by the flame analyzer, is obtained after the adjustment; or the adjustment procedure is repeated until the radical emission is within the limits.

In one example the flame analyzer further comprises an output device for displaying information about the system. Non-limiting examples of information that may be displayed on the output device are images, alarms, control signals and the overall status of the system.

The substrate of the disclosure is in one example paper, paperboard or carton, for example a web-shaped paper, paperboard or carton.

In one example the substrate is a plastic film, for example a multi-layered film or a stretched film such as an oriented film, e.g. a mono- or biaxially oriented film, e.g. a BOPP film.

The invention as defined herein and in the accompanying claims generally improves the safety for the operator as the manual adjustment of the distance between the burner and the substrate does not require visual inspection of the flame. The flame may thus be hidden for the operator.

Additionally the disclosure improves the process control treating a substrate by a flame. The control is improved and thus adhesion between substrate and a further material extruded onto the substrate may be improved and optimized. The disclosure also provides a method for controlling the settings of flame treatment according to a pre-determined specification, and facilitating the control thereof. The disclosure also ensure that performance settings are consistent between different manufactoring cites and thus improving the control and the specification of the final material, whereever produced. The disclosure enables sufficient adhesion over substantially the whole surface of the substrate.

According to one example the present disclosure relates to treatment of paper, paperboard or carton used in a lamination process, such as an extrusion lamination process, for preparing a material suitable for preparing a package. Said package being used in in food and dairy filling equipment, such as aseptic packaging.

In one example the present disclosure is used in the converting line where a paper, or paperboard or carton is laminated to a packaging laminate used in packaging containers of the single use disposable type for liquid foods. One such commonly occurring packaging container is marketed under the trademark Tetra Brik Aseptic® and is principally employed for aseptic packaging of liquid foods such as milk, fruit juices etc, sold for long term ambient storage.

The invention has mainly been described above with reference to a few embodiments. However, as is readily appreciated by a person skilled in the art, other embodiments than the ones disclosed above are equally possible within the scope of the invention, as defined by the appended patent claims.

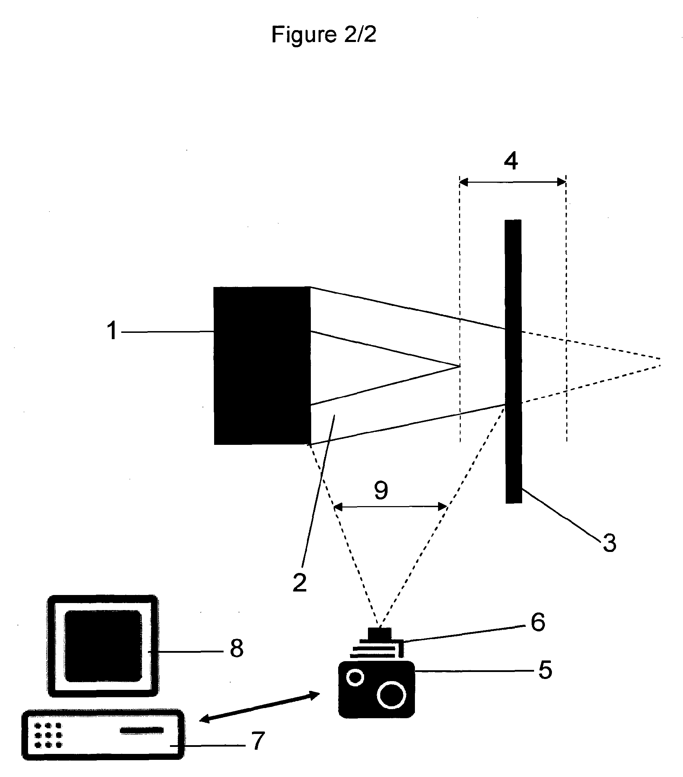

In Fig 2 a schematic illustration of the system of the invention is disclosed. The system discloses a burner (1) from which a flame (2) emanates. The flame hits a substrate (3) to be treated. The substrate (3), is arranged within a variable distance from the substrate (1). The distance (4) is obtained by monitoring radical emission from the flame (2) by a. a flame analyzer which in Fig 2 comprises a camera (5) having a filter (6) and a processing unit (7), such as a computer, said processing unit (7) may be integrated with the camera or a separate unit. The processing unit (7) use the information received by the flame analyzer to determine if the radical emission is within pre-determined limits. The flame analyzer may also comprise an output device (8), for example a monitor or a printer. The flame analyzer is arranged to monitor (9) at least part of the flame. The limits may be used to generate an alarm in order to discard substrate that has not been sufficiently treated. Additionally the distance (4) between the substrate (3) and the burner (1) may be adjusted, manually or automatically until the radical emission is within the limits. Such adjustment allows the substrate to be sufficiently treated.

## Claims

1. A method for optimizing adhesion by controlling flame treatment of a substrate, in which treatment a flame emanating from a burner is applied to a substrate, said method comprising
controlling the mass flow of fuel and air fed to the burner,
acquiring radical emission data by monitoring radical emission emanating from the flame using a flame analyzer,
processing the radical emission data,
comparing the thus acquired radical emission data with radical emission data from a database, and
outputting the result of the comparison.

2. The method of claim 1, further comprising adjusting at least one of:
the mass flow of fuel and/or air fed to the burner,
a relative angle between the burner and the substrate, and
the distance between the burner and the substrate;
when the acquired radical emission data deviate from the radical emission data in the database.

3. The method of claim 1 or 2, wherein outputting the result is to generate an error signal when the acquired radical emission data deviate from the radical emission data in the database.

4. The method according to claim 1, wherein the flame analyzer utilizes a non-invasive monitoring technique.

5. The method according to claim 1 or 2, wherein the substrate is paper, paperboard, carton or plastic film.

6. The method according to claim 1 or 2, wherein the radical emission is hydroxyl radical emission, NH radical emission, CN radical emission, CH radical emission and/or C2 radical emission.

7. The method according to claim 1 or 2, wherein the radical emission is hydroxyl radical emission.

8. The method according to claim 1 or 2, wherein the flame analyzer comprises a camera and a filter.

9. The method according to claim 8, wherein the camera is a camera having at least one image sensor that detects light in the ultraviolet range.

10. The method according to claim 9, wherein the camera is a charge coupled device camera.

11. The method according to any one of claims 9-10, wherein a filter having a λₘₐₓ at 310 ± 5 nm, 340 ± 5 nm, 390 ± 5 nm, 430 ± 5 nm, or 520 ± 5 nm is used.

12. A system for controlling flame treatment of a substrate (3) in order to optimize adhesion, said system comprising a burner (1) configured for applying a flame (2) to the substrate (3), a flame analyzer comprising a camera (5) and a filter(6), wherein the flame analyzer is arranged to acquire radical emission data from the flame (2); wherein the system further comprises a processing unit (7) to which radical emission data acquired by the flame analyzer is transferred and compared with radical emission data from a database.

13. The system according to claim 12, wherein the processing unit (7) using the information received by the flame analyzer is a separate unit or integrated in the flame analyzer.

14. The system according to any one of claims 12-13, wherein the system further comprises an output device (8).

15. The system according to anyone of claims 12-13, wherein the camera (5) is a camera having at least one image sensor that detects light in the ultraviolet range.

16. The system according to any one of claims 12-13, wherein the camera is a charge coupled device camera.

17. The system according to claim 12, comprising a filter (6) having a λₘₐₓ at 310 ± 5 nm, 340 ± 5 nm, 390 ± 5 nm, 430 ± 5 nm, or 520 ± 5 nm.

18. The system according to claim 17, wherein the filter (6) is having a λₘₐₓ at 310 ± 5 nm.

## Patentansprüche

1. Verfahren zum Optimieren von Haftung durch Steuern von Flammenbehandlung eines Substrats, bei welcher Behandlung eine Flamme, die aus einem Brenner austritt, auf ein Substrat aufgebracht wird, wobei das Verfahren umfasst:
Steuern des Masseflusses von Brennstoff und Luft, der dem Brenner zugeführt wird,
Aufnehmen von Radikalemissionsdaten durch Überwachen der Radikalemission, die aus der Flamme austritt, unter Verwendung eines Flammenanalysators,
Verarbeiten der Radikalemissionsdaten,
Vergleichen der so aufgenommenen Radikalemissionsdaten mit Radikalemissionsdaten aus einer Datenbank, und
Ausgeben des Ergebnisses des Vergleichs.

2. Verfahren gemäß Anspruch 1, ferner umfassend Einstellen von wenigstens einem von:
dem Massefluss von Brennstoff und/oder Luft, der dem Brenner zugeführt wird,
einem relativen Winkel zwischen dem Brenner und dem Substrat und
dem Abstand zwischen dem Brenner und dem Substrat;
wenn die aufgenommenen Radikalemissionsdaten von den Radikalemissionsdaten in der Datenbank abweichen.

3. Verfahren gemäß Anspruch 1 oder 2, wobei das Ausgeben des Ergebnisses Erzeugen eines Fehlersignals ist, wenn die aufgenommenen Radikalemissionsdaten von den Radikalemissionsdaten in der Datenbank abweichen.

4. Verfahren gemäß Anspruch 1, wobei der Flammenanalysator ein nichtinvasives Überwachungsverfahren einsetzt.

5. Verfahren gemäß Anspruch 1 oder 2, wobei das Substrat Papier, Pappe, Karton oder Kunststofffilm ist.

6. Verfahren gemäß Anspruch 1 oder 2, wobei die Radikalemission Hydroxy-Radikalemission, NH-Radikalemission, CN-Radikalemission, CH-Radikalemission und/oder C2-Radikalemission ist.

7. Verfahren gemäß Anspruch 1 oder 2, wobei die Radikalemission Hydroxy-Radikalemission ist.

8. Verfahren gemäß Anspruch 1 oder 2, wobei der Flammenanalysator eine Kamera und ein Filter umfasst.

9. Verfahren gemäß Anspruch 8, wobei die Kamera eine Kamera mit wenigstens einem Bildsensor ist, der Licht in dem ultravioletten Bereich nachweist.

10. Verfahren gemäß Anspruch 9, wobei die Kamera eine Charge-Coupled-Device-Kamera ist.

11. Verfahren gemäß einem der Ansprüche 9-10, wobei ein Filter mit einer λₘₐₓ bei 310 ± 5 nm, 340 ± 5 nm, 390 ± 5 nm, 430 ± 5 nm oder 520 ± 5 nm verwendet wird.

12. System zum Steuern von Flammenbehandlung eines Substrats (3) zum Optimieren von Haftung, wobei das System einen Brenner (1), der zum Aufbringen einer Flamme (2) auf das Substrat (3) gestaltet ist, und einen Flammenanalysator umfassend eine Kamera (5) und ein Filter (6) umfasst, wobei der Flammenanalysator angeordnet ist, Radikalemissionsdaten aus der Flamme (2) aufzunehmen; wobei das System ferner eine Prozessoreinheit (7) umfasst, zu der die von dem Flammenanalysator aufgenommenen Radikalemissionsdaten übertragen werden und mit Radikalemissionsdaten aus einer Datenbank verglichen werden.

13. System gemäß Anspruch 12, wobei die Prozessoreinheit (7), die die von dem Flammenanalysator empfangenen Daten verwendet, eine gesonderte Einheit ist oder in den Flammenanalysator integriert ist.

14. System gemäß einem der Ansprüche 12-13, wobei das System ferner eine Ausgabevorrichtung (8) umfasst.

15. System gemäß einem der Ansprüche 12-13, wobei die Kamera (5) eine Kamera mit wenigstens einem Bildsensor ist, der Licht in dem ultravioletten Bereich nachweist.

16. System gemäß einem der Ansprüche 12-13, wobei die Kamera eine Charge-Coupled-Device-Kamera ist.

17. System gemäß Anspruch 12, umfassend ein Filter (6) mit einer λₘₐₓ bei 310 ± 5 nm, 340 ± 5 nm, 390 ± 5 nm, 430 ± 5 nm oder 520 ± 5 nm.

18. System gemäß Anspruch 17, wobei das Filter (6) eine λₘₐₓ bei 310 ± 5 nm aufweist.

## Revendications

1. Procédé pour optimiser l'adhérence par la régulation du traitement à la flamme d'un substrat, dans lequel le traitement d'une flamme émanant d'un brûleur est appliqué à un substrat, ledit procédé comprenant :
la régulation du débit massique de combustible et d'air introduit dans le brûleur,
l'acquisition de données d'émission de radicaux par surveillance de l'émission de radicaux émanant de la flamme par utilisation d'un analyseur de flamme,
le traitement des données d'émission de radicaux,
la comparaison des données d'émission de radicaux ainsi acquises à des données d'émission de radicaux provenant d'une base de données, et
la sortie du résultat de la comparaison.

2. Procédé selon la revendication 1, comprenant en outre, quand les données d'émission de radicaux acquises s'écartent des données d'émission de radicaux de la base de données, l'ajustement d'au moins l'un :
du débit massique de combustible et/ou d'air introduit dans le brûleur,
de l'angle relatif entre le brûleur et le substrat, et
de la distance entre le brûleur et le substrat.

3. Procédé selon la revendication 1 ou 2, dans lequel la sortie du résultat consiste à générer un signal d'erreur quand les données d'émission de radicaux acquises s'écartent des données d'émission de radicaux de la base de données.

4. Procédé selon la revendication 1, dans lequel l'analyseur de flamme utilise une technique de surveillance non-invasive.

5. Procédé selon la revendication 1 ou 2, dans lequel le substrat est un papier, un carton mince, un carton ou un film plastique.

6. Procédé selon la revendication 1 ou 2, dans lequel l'émission de radicaux est l'émission de radicaux hydroxyle, l'émission de radicaux NH, l'émission de radicaux CN, l'émission de radicaux CH et/ou l'émission de radicaux en C2.

7. Procédé selon la revendication 1 ou 2, dans lequel l'émission de radicaux est l'émission de radicaux hydroxyle.

8. Procédé selon la revendication 1 ou 2, dans lequel l'analyseur de flamme comprend une caméra et un filtre.

9. Procédé selon la revendication 8, dans lequel la caméra est une caméra ayant au moins un capteur d'image qui détecte la lumière dans la gamme ultraviolette.

10. Procédé selon la revendication 9, dans lequel la caméra est une caméra à dispositif à transfert de charge.

11. Procédé selon l'une quelconque des revendications 9-10, dans lequel on utilise un filtre ayant un λₘₐₓ à 310 ± 5 nm, 340 ± 5 nm, 390 ± 5 nm, 430 ± 5 nm, ou 520 ± 5 nm.

12. Système pour réguler le traitement à la flamme d'un substrat (3) dans le but d'optimiser l'adhérence, ledit système comprenant un brûleur (1) conçu pour appliquer une flamme (2) sur un substrat (3), un analyseur de flamme comprenant une caméra (5) et un filtre (6), dans lequel l'analyseur de flamme est disposé de façon à acquérir de la flamme (2) des données d'émission de radicaux ; le système comprenant en outre une unité de traitement (7), les données d'émission de radicaux acquises par l'analyseur de flamme y étant transférées, et comparées à des données d'émission de radicaux provenant d'une base de données.

13. Système selon la revendication 12, dans lequel l'unité de traitement (7) utilisant les informations reçues par l'analyseur de flamme est une unité distincte, ou intégrée dans l'analyseur de flamme.

14. Système selon l'une quelconque des revendications 12-13, le système comprenant en outre un dispositif de sortie (8).

15. Système selon l'une quelconque des revendications 12-13, dans lequel la caméra (5) est une caméra ayant au moins un capteur d'image qui détecte la lumière dans la gamme ultraviolette.

16. Système selon l'une quelconque des revendications 12-13, dans lequel la caméra est une caméra à dispositif à couplage de charge.

17. Système selon la revendication 12, comprenant un filtre (6) ayant un λₘₐₓ à 310 ± 5 nm, 340 ± 5 nm, 390 ± 5 nm, 430 ± 5 nm ou 520 ± 5 nm.

18. Système selon la revendication 17, dans lequel le filtre (6) a un λₘₐₓ à 310 ± 5 nm.
